# EUROPÄISCHE PATENTSCHRIFT

(11) **EP 2 399 867 B1**
(45) Veröffentlichungstag und Bekanntmachung des Hinweises auf die Patenterteilung: **21.08.2013**
(21) Anmeldenummer: 10167350.7
(22) Anmeldetag: 25.06.2010
(51) Int. Cl.: C01G 1/02, C01G 53/00

(54) **Verfahren zur Herstellung Lithium enthaltender Mischoxide**
Method for producing mixed oxides containing lithium
Procédé de fabrication d'oxydes mixtes contenant du lithium

(43) Veröffentlichungstag der Anmeldung: 28.12.2011
(73) Patentinhaber: Evonik Degussa GmbH, 45128 Essen (DE)
(72) Erfinder: Katusic, Stipan, Prof., 65812 Bad Soden (DE); Kreß, Peter, 63791 Karlstein (DE)

(56) Entgegenhaltungen:
- WO-A1-2005/105673
- GB-A- 2 421 031
- S.H. JU, D.Y. KIM, Y.C. KANG: "The characteristics of Li(Ni1/3Co1/3Mn1/3)O2 particles preparedfrom precursor particles with spherical shape obtainedby spray pyrolysis", CERAMICS INTERNATIONAL, Bd. 33, Nr. 6, 2007, Seiten 1093-1098, XP002610851,

## Beschreibung

Die Erfindung betrifft ein Verfahren zur Herstellung Lithium enthaltender Mischoxide mittels eines Spray-Pyrolyseverfahrens.

In EP-A-814524 wird ein Spraypyrolyseverfahren zur Herstellung eines Lithium-Mangan-Mischoxides offenbart, bei dem man Lithium- und Mangansalze, gelöst in einem Wasser/Alkoholgemisch, verdüst, das entstehende Aerosol mittels einer externen Beheizung bei 400 bis 900°C in Gegenwart von Sauerstoff pyrolysiert und das erhaltene Reaktionsprodukt nachfolgend thermisch behandelt um ein Lithium-Mangan-Mischoxid zu erhalten, welches einen mittleren Teilchendurchmesser zwischen 1 und 5 µm und eine spezifische Oberfläche zwischen 2 und 10 m²/g aufweist. In EP-A-824087 wird ein analoges Verfahren zur Herstellung Lithium-Nickel-Mischoxiden bzw. Lithium-Kobalt-Mischoxiden offenbart. In EP-A-876997 wird zusätzlich offenbart, dass zur Herstellung dieser Mischoxide Verbindungen wie Wasserstoffperoxid oder Salpetersäure eingesetzt werden, die bei der Pyrolyse Sauerstoff liefern.

Als nachteilig bei den in EP-A-814524, EP-A-824087 und EP-A-876997 offenbarten Verfahren ist die bei vielen Hochtemperaturprozessen zu beobachtende Thermophorese unter Bildung eines Wandbelages, der die eingetragene Energie mindert.

Taniguchi et al. (Journal of Power Sources 109 (2002) 333-339) offenbaren ein Spraypyrolyseverfahren zur Herstellung eines Lithium-Mischoxides der Zusammensetzung LiM_{1/6}Mn_{11/6}O₄ (M = Mn, Co, Al und Ni), bei dem ein Ultraschallvernebler zur Atomisierung einer Lösung der Nitrate in Wasser, 0,45 mol/l, eingesetzt wird. Die Temperatur wird durch einen elektrisch beheizten Reaktor bereitgestellt. Ein Ultraschallvernebler wird ebenfalls von Ogihara et al. (Transactions of the Materials Research Society of Japan 32 (2007) 717-720) bei der Spraypyrolyse zur Herstellung von Li[Ni_{1/3}Mn_{1/3}Co_{1/3}]O₂ eingesetzt.

Die Herstellung des letztgenannten Mischoxides via Spraypyrolyse wird auch von Kang et al. (Ceramics International 33 (2007) 1093-1098) beschrieben. Dabei werden Lösungen der Nitrate beziehungsweise Acetate von Nickel, Kobalt und Mangan sowie Lithiumcarbonate eingesetzt. Nach einem ähnlichen Verfahren beschreiben Kang et al. (Journal of Power Sources 178 (2008) 387-392) die Herstellung von LiNi_{0,8}Co_{0,15}Mn_{0,05}O₂.

Pratsinis et al. (Materials Chemistry and Physics 101 (2007) 372-378) beschreiben ein Spraypyrolyseverfahren zur Herstellung von LiMn₂O₄, Li₄Ti₅O₁₂ und LiFe₅O₈. Dabei werden Lithium-t-butoxid und Manganacetylacetonat beziehungweise Mangan-2-ethylhexanoat, Lithium-t-butoxid und Titanisopropoxid und Lithium-t-butoxid und Eisennaphthenat, eingesetzt. Ein ähnliches Verfahren beschreiben Pratsinis et al. in Journal of Power Sources 189 (2009) 149-154, bei dem die Acetylacetonate von Lithium und Mangan in einem Lösungsmittelgemisch aus 2-Ethylhexansäure und Acteonitril gelöst werden.

WO 2005/105673 offenbart ein Verfahren zur Herstellung von aggregierten, Edelmetall dotierten Metall-Mischoxidpulvern. GB 2421031 offenbart die Herstellung ultrafeiner Metal-, Metalloxid-, komplexer Metalloxidpulver mittels Sprühpyrolyse.

Nachteile der in der Journalliteratur offenbarten Spraypyrolyse-Verfahren sind deren geringe Durchsätze, so dass eine großtechnische Umsetzung nicht wirtschaftlich ist. Zudem eignen sich diese Anordnungen nicht die Prozesse auf höhere Durchsätze hochzurechnen. Die technische Aufgabe der vorliegenden Erfindung bestand daher darin ein Verfahren bereitzustellen, welches die Nachteile der im Stand genannten Spraypyrolyse-Verfahren nicht aufweist.

Gegenstand der vorliegenden Erfindung ist ein Verfahren zur Herstellung eines Lithium enthaltenden Mischoxidpulvers, bei dem man
a) man einen Strom einer Lösung, welche jeweils wenigstens eine Lithiumverbindung und wenigstens eine Metallverbindung einer oder mehrerer Mischoxidkomponenten im erforderlichen stöchiometrischen Verhältnis enthält, mittels eines Zerstäubergases zu einem Aerosol zerstäubt, welches eine mittlere Tropfengröße von weniger als 100 µm aufweist,
b) das Aerosol in einem Reaktionsraum mit einer Flamme, die aus einem Gemisch von Brenngas und Luft erhalten wird, zur Reaktion bringt, wobei die Gesamtmenge an Sauerstoff mindestens zur vollständigen Umsetzung des Brenngases und der Metallverbindungen ausreicht,
c) den Reaktionsstrom kühlt und
d) anschließend das feste Produkt aus dem Reaktionsstrom abtrennt.

Das erfindungsgemäße Verfahren eignet sich insbesondere zur Herstellung von Mischoxiden mit einer BET-Oberfläche von 0,05 bis 100 m²/g, bevorzugt bis 20 m²/g. Die BET-Oberfläche wird bestimmt mittels DIN ISO 9277.

In einer besonderen Ausführungsform der Erfindung kann das feste Produkt nach der Abtrennung aus dem Reaktionsstrom bei Temperaturen von 500 bis 1200°C, bevorzugt 800 bis 1100°C, besonders bevorzugt 900 bis 1050°C, über einen Zeitraum von 2 bis 36 Stunden thermisch behandelt werden.

Geeignete Brenngase können Wasserstoff, Methan, Ethan, Propan, Butan und deren Gemische sein. Bevorzugt wird Wasserstoff eingesetzt. Die Brenngase können an einer oder mehreren Stellen in die Flamme gegeben werden. Die Menge an Sauerstoff ist bei dem erfindungsgemäßen Verfahren so zu wählen, dass sie mindestens zur vollständigen Umsetzung des Brenngases und der Metallverbindungen ausreicht. Es ist in der Regel vorteilhaft einen Überschuß an Sauerstoff einzusetzen. Dieser Überschuß wird zweckmäßigerweise ausgedrückt als das Verhältnis von vorhandenem Sauerstoff / Verbrennung des Brenngases notwendiger Sauerstoff und als Lambda bezeichnet. Lambda beträgt bevorzugt 1,8 bis 4,0.

In einer besonderen Ausführungsform ist die Summe der Konzentrationen der Lithium- und Metallverbindungen in der Lösung wenigstens 10 Gew.-%, bevorzugt 10 bis 20 Gew.-%, besonders bevorzugt 12 bis 18 Gew.-%, gerechnet jeweils als Metalloxid.

In einer weiteren besonderen Ausführungsform ist das Verhältnis Massestrom der Lösung/Volumenstrom des Zerstäubergases, in g Lösung/Nm³ Zerstäubergas, wenigstens 500, bevorzugt 500 bis 3000, besonders bevorzugt 600 bis 1000.

In einer weiteren besonderen Ausführungsform ist die Menge an Metallverbindungen, Luft, Brenngas und Zerstäuberluft so gewählt ist, dass 0,001 ≤ kg Mischoxid / Nm³ Gas ≤ 0,05 gilt, bevorzugt 0,05 ≤ kg Mischoxid / Nm³ Gas ≤ 0,02, wobei sich Gas auf die Summe der Volumenströme von Luft, Brenngas und Zerstäuberluft bezieht.

In einer weiteren besonderen Ausführungsform wird eine hohe mittlere Austrittsgeschwindigkeit des Aerosols in den Reaktionsraum, bevorzugt von mindestens 50 ms⁻¹, besonders bevorzugt von 100 bis 300 ms⁻¹ und/oder einer niedrigen mittleren Geschwindigkeit des Reaktionsgemisches im Reaktionsraum, bevorzugt von 0,1 ms⁻¹ bis 10 ms⁻¹, besonders bevorzugt von 1 bis 5 ms⁻¹, ausgegangen.

Bei den Mischoxidpulvern der vorliegenden Erfindung handelt es sich um solche, die Lithium als eine Komponente und ein oder mehrere, bevorzugt 1 bis 5, besonders bevorzugt 2 bis 4, weitere Metalle als Mischoxidkomponente aufweisen.

Die Anteile der Komponenten sind dabei nicht beschränkt. In der Regel werden die Anteile an den Einsatzstoffen so gewählt, dass der Anteil an Lithium im Mischoxid 1 bis 20 Gew.-%, bevorzugt 3 bis 6 Gew.-% beträgt.

Die Einsatzstoffe werden bevorzugt mit einer Reinheit von mindestens 98 Gew.-%, besonders bevorzugt mindestens 99 Gew.-% und ganz besonders bevorzugt von mindestens 99,5 Gew.-% eingesetzt.

Es ist für die vorliegende Erfindung wesentlich, dass die Lithium- und Metallverbindungen in einer Lösung vorliegen. Um die Löslichkeit zu Erreichen und um eine geeignete Viskosität für das Zerstäuben der Lösung zu erzielen kann die Lösung erwärmt werden. Prinzipiell sind alle löslichen Metallverbindungen einsetzbar, die oxidierbar sind. Dabei kann es sich um anorganische Metallverbindungen, wie Nitrate, Chloride, Bromide, oder organische Metallverbindungen, wie Alkoxide oder Carboxylate anorganische und/oder organische Metallverbindungen handeln. Als Alkoxide können bevorzugt Ethylate, n-Propylate, iso-Propylate, n-Butylate und/oder tert.-Butylate eingesetzt werden. Als Carboxylate können die der Essigsäure, Propionsäure, Butansäure, Hexansäure, Oxalsäure, Malonsäure, Bernsteinsäure, Glutarsäure, Adipinsäure, Octansäure, 2-Ethyl-Hexansäure, Valeriansäure, Caprinsäure und/oder Laurinsäure zugrundeliegenden Verbindungen eingesetzt werden. Besonders vorteilhaft können 2-Ethlyhexanoate oder Laurate eingesetzt werden. Die Lösung kann ein oder mehrere anorganische Metallverbindungen, ein oder mehrere organische Metallverbindungen oder Mischungen von anorganischen und organischen Metallverbindungen enthalten.

Bei den Lösungsmitteln kann bevorzugt aus der Gruppe bestehend aus Wasser, C₅-C₂₀-Alkanen, C₁-C₁₅-Alkancarbonsäuren und/oder C₁-C₁₅-Alkanolen ausgewählt werden. Besonders bevorzugt kann Wasser oder ein Mischung aus Wasser und einem organischen Lösungsmittel eingesetzt werden.

Als organische Lösungsmittel, beziehungsweise als Bestandteil von organischen Lösungsmittelgemischen, können bevorzugt Alkohole wie Methanol, Ethanol, n-Propanol, iso-Propanol, n-Butanol oder tert.-Butanol, Diole wie Ethandiol, Pentandiol, 2-Methyl-2,4-pentandiol, C₁-C₁₂-Carbonsäuren wie beispielsweise Essigsäure, Propionsäure, Butansäure, Hexansäure, Oxalsäure, Malonsäure, Bernsteinsäure, Glutarsäure, Adipinsäure, Octansäure, 2-Ethyl-Hexansäure, Valeriansäure, Caprinsäure, Laurinsäure eingesetzt werden. Weiterhin können Benzol, Toluol, Naphtha und/oder Benzin eingesetzt werden.

Als Lithiumverbindung können bevorzugt können Lithiumnitrat und/oder ein oder mehrere Lithiumcarboxylate, wie Lithiumacetat oder Lithiumethylhexanoat eingesetzt werden.

Als weitere Metallverbindungen werden solche bevorzugt, deren Metalle aus der Gruppe bestehend aus Ag, Al, B, Ca, Cd, Co, Cr, Cu, Fe, Ga, Ge, In, Mg, Mn, Mo, Nb, Ni, Pd, Rh, Ru, Sc, Sn, Ti, V, Y und Zn ausgewählt werden. Besonders bevorzugt werden Metallverbindungen mit Co, Cr, Fe, Mn, Ni, Sn, Ti, V und Y. Besonders vorteilhaft kann man ein oder mehrere Metallverbindungen von Ni und Co oder ein oder mehrere Metallverbindungen von Ni, Co und Mn einsetzen.

Die nach dem erfindungsgemäßen Verfahren hergestellten Mischoxidpulver eignen sich insbesondere als Bestandteil von Sekundärbatterien.

### Beispiele

### Analytik:

Der d₅₀-Wert resultiert aus der Summendurchgangsverteilungskurve der volumengemittelten Grössenverteilung, Diese wird in üblicher Weise durch Laserbeugungsmethoden ermittelt. Im Rahmen der vorliegenden Erfindung wird hierzu ein Gerät Cilas 1064 der Firma Cilas eingesetzt. Unter einem d₅₀-Wert wird verstanden, dass 50% der Mischoxidpartikel A innerhalb des angegebenen Grössenbereichs liegen. Unter einem d₉₀-Wert wird verstanden, dass 90% der Mischoxidpartikel A innerhalb des angegebenen Grössenbereichs liegen. Unter einem d₉₉-Wert wird verstanden, dass 99% der Mischoxidpartikel A innerhalb des angegebenen Grössenbereichs liegen.

Eingesetzte Lösungen: Für die Beispiele 1 bis 6 wird jeweils eine Lösung, die die in der Tabelle 1 genannten Salze enthält mit Wasser beziehungsweise 2-Ethylhexansäure (2-EHA) als Lösungsmittel hergestellt.

Aus der Lösung und mittels Zerstäuberluft und einer Düse ein Aerosol erzeugt, welches in einen Reaktionsraum zerstäubt wird. Hier brennt eine Knallgasflamme aus Wasserstoff und Luft, in der das Aerosol zur Reaktion gebracht wird. Nach Abkühlung wird das Mischoxidpulver an einem Filter von gasförmigen Stoffen abgetrennt und in einem Ofen über einen bestimmten Zeitraum thermisch behandelt. Tabelle 1 nennt alle relevanten Parameter zur Herstellung der Mischoxidpulver sowie wichtige Stoffeigenschaften der erhaltenen Pulver.

Das erfindungsgemäße Verfahren erlaubt hohe Durchsätze, ein scale-up ist problemlos möglich. Die erhaltenen Produkte zeigen eine hohe Reinheit und die Zusammensetzung der Mischoxide ist beliebig variierbar. Wenn gewünscht, können Mischoxide mit einer einstellbaren Partikelgrößenverteilung (bimodal oder trimodal) hergestellt werden. Solche Produkte können gute Sintereigenschaften aufweisen.

**Tabelle 1: Einsatzstoffe und Reaktionsparameter; Stoffeigenschaften der Pulver**

| Beispiel | | **1** | **2** | **3** | **4** | **5** | **6** |
|---|---|---|---|---|---|---|---|
| Lithiumacetat | Gew.% | 1,08 | 1,15 | 1,21 | - | - | - |
| Lithiumoctoat | Gew.% | - | - | - | 4,68 | 17,82 | 20,10 |
| Nickel(II)acetat | Gew.% | 3,03 | - | - | - | - | - |
| Nickel(II)nitrat | Gew.% | - | 3,20 | 4,02 | - | - | - |
| Nickel(II)octoat | Gew.% | - | - | - | 6,94 | - | - |
| Mangan(II)acetat | Gew.% | 2,84 | - | - | - | - | - |
| Mangan(II)nitrat | Gew.% | - | 2,99 | 2,89 | - | - | - |
| Mangan(II)octoat | Gew.% | - | - | - | 6,47 | - | - |
| Cobalt(II)acetat | Gew.% | 3,04 | - | - | - | - | - |
| Cobalt(II)nitrat | Gew.% | - | 3,21 | 2,17 | - | - | - |
| Cobalt(II)octoat | Gew.% | - | - | - | 7,75 | 40,98 | - |
| Titan-n-butoxid | Gew.% | - | - | - | - | - | 53,48 |
| Lösungsmittel | | H₂O | H₂O | H₂O | 2-EHA | 2-EHA | 2-EHA |
| Σ MeX¹⁾ | Gew.% | 14,47 | 15,18 | 14,91 | 10,71 | 11,63 | 14,90 |
| m'_{LSG}²⁾ | g/h | 2500 | 2000 | 1800 | 2000 | 1200 | 1200 |
| m'_{ZSL}³⁾ | Nm³/h | 1,0 | 2,5 | 2,5 | 2,0 | 4,0¹³⁾ | 3,5¹³⁾ |
| m'_{LSG}/m'_{ZSL} | g/Nm³ | 2500 | 800 | 720 | 1000 | 300 | 343 |
| V₁⁴⁾ | m/s | 88,4 | 221,0 | 221,0 | 176,8 | 353,6 | 309,4 |
| d₉₀⁵⁾ | µm | 87 | 92 | 93 | 96 | 68 | 71 |
| Wasserstoff | Nm³/h | 4,6 | 5,5 | 5,5 | 8 | 5 | 5,5 |
| Luft | Nm³/h | 26 | 25 | 25 | 28 | 30 | 21 |
| Durchsatz⁶⁾ | kg/Nm³ | 0,0114 | 0,0092 | 0,0081 | 0,0056 | 0,0040 | 0,0067 |
| Lambda | | 2,37 | 1,87 | 1,87 | 1,47 | 2,52 | 1,41 |
| V₂⁷⁾ | m/s | 2,44 | 2,44 | 2,42 | 2,46 | 2,44 | 2,44 |
| t₂⁸⁾ | S | 1,23 | 1,23 | 1,24 | 1,22 | 1,23 | 1,23 |
| T_{FI1}⁹⁾/T_{FI2}¹⁰⁾ | °C | 826/571 | 874/602 | 896/632 | 1005/751 | 863/906 | 881/953 |
| T_{Ofen} | °C | 1050 | 925 | 950 | 1020 | - | - |
| t_{Temperung} | h | 20 | 4 | 4 | 12 | - | - |
| Anteile | | | | | | | |
| Li | | 3,75 | 3,92 | 4,25 | 5,84 | 10,54 | 11,01 |
| Ni | Gew.% | 33,09 | 33,16 | 42,97 | 31,35 | - | - |
| Mn | | 29,71 | 29,62 | 29,62 | 27,68 | - | - |
| Co | | 33,44 | 33,30 | 23,16 | 35,13 | 89,46 | - |
| Ti | | - | - | - | | - | 88,99 |
| BET-Oberfläche¹¹⁾ | m²/g | 8,0/0,1 | 5,3/0,1 | 8,0/0,1 | 16/0,7 | 15/- | 13/- |
| Partikelverteilung¹²⁾ | µm/% | trimodal | bimodal | trimodal | n.b. | n.b. | n.b. |
| Max₁ / Anteil | | 0,7/22,7 | 1,9/48,8 | 0,8/23,0 | | | |
| Max₂ / Anteil | | 1,8/30,0 | 8,0/51,2 | 1,9/30,8 | | | |
| Max₃ / Anteil | | 7,0/47,3 | -/- | 7,5/46,2 | | | |

| | | | | | | | |
|---|---|---|---|---|---|---|---|
| 1) als Oxide; 2) Massenstrom Lösung; 3) Volumenstrom Zerstäuberluft; 4) v₁ = mittlere Austrittsgeschwindigkeit des Aerosoles in den Reaktionsraum; 5) d₉₀-Wert der Tropfen bei der Aerosol-Erzeugung 3; 6) kg Mischoxid/Nm³ Gas; 7) v₂ = mittlere Geschwindigkeit im Reaktor; 8) t₂ = mittlere Verweilzeit im Reaktor; 9) T_{Fl1} = Flammentemperatur 50 cm von Brennermund; 10) T_{Fl2} = 200 cm von Brennermund; 11) jeweils vor/nach Temperung; 12) vor Temperung; 13) N₂ anstelle von Luft; | | | | | | | |

## Patentansprüche

1. Verfahren zur Herstellung eines Lithium enthaltenden Mischoxidpulvers, **dadurch gekennzeichnet, dass**
a) man einen Strom einer Lösung, welche jeweils wenigstens eine Lithiumverbindung und wenigstens eine Metallverbindung einer oder mehrerer Mischoxidkomponenten im erforderlichen stöchiometrischen Verhältnis enthält, mittels eines Zerstäubergases zu einem Aerosol,
zerstäubt, welches eine mittlere Tropfengröße von weniger als 100 µm aufweist, und
b) das Aerosol in einem Reaktionsraum mit einer Flamme, die aus einem Gemisch von Brenngas und Luft erhalten wird, zur Reaktion bringt, wobei die Gesamtmenge an Sauerstoff mindestens zur vollständigen Umsetzung des Brenngases und der Metallverbindungen ausreicht,
c) den Reaktionsstrom kühlt und
d) anschließend das feste Produkt aus dem Reaktionsstrom abtrennt.

2. Verfahren nach Anspruch 1,
**dadurch gekennzeichnet, dass** das feste Produkt nach der Abtrennung aus dem Reaktionsstrom bei Temperaturen von 500 bis 1200°C über einen Zeitraum von 2 bis 36 Stunden thermisch behandelt wird.

3. Verfahren nach Anspruch 1 oder 2,
**dadurch gekennzeichnet, dass** man das Brenngas an mehreren Stellen in die Flamme gibt.

4. Verfahren nach den Ansprüchen 1 bis 3,
**dadurch gekennzeichnet, dass** Lambda, definiert als das Verhältnis vorhandener Sauerstoff aus der eingesetzten Luft / Verbrennung des Brenngases notwendiger Sauerstoff, 1,8 bis 4,0 beträgt.

5. Verfahren nach den Ansprüchen 1 bis 4,
**dadurch gekennzeichnet, dass** die Summe der Konzentrationen der Lithium- und Metallverbindungen in der Lösung wenigstens 10 Gew.-% beträgt.

6. Verfahren nach den Ansprüchen 1 bis 5,
**dadurch gekennzeichnet, dass** das Verhältnis Massestrom der Lösung/Volumenstrom des Zerstäubergases, in g Lösung/Nm³ Zerstäubergas, wenigstens 500 ist.

7. Verfahren nach den Ansprüchen 1 bis 6,
**dadurch gekennzeichnet, dass**
die Menge an Metallverbindungen, Luft, Brenngas und Zerstäuberluft so gewählt ist, dass 0,001 ≤ kg Mischoxid / Nm³ Gas ≤ 0,05 gilt, wobei sich Gas auf die Summe der Volumenströme von Luft, Brenngas und Zerstäuberluft bezieht.

8. Verfahren nach den Ansprüchen 1 bis 7,
**dadurch gekennzeichnet, dass** die mittlere Austrittsgeschwindigkeit des Aerosols in den Reaktionsraum mindestens 50 ms⁻¹ und die mittlere Geschwindigkeit des Reaktionsgemisches im Reaktionsraum 0,1 ms⁻¹ bis 10 ms⁻¹ ist.

9. Verfahren nach den Ansprüchen 1 bis 8,
**dadurch gekennzeichnet, dass** anorganische und/oder organische Metallverbindungen eingesetzt werden.

10. Verfahren nach den Ansprüchen 1 bis 9,
**dadurch gekennzeichnet, dass** das Lösungsmittel ausgewählt ist aus der Gruppe bestehend aus Wasser, C₅-C₂₀-Alkanen, C₁-C₁₅-Alkancarbonsäuren und/oder C₁-C₁₅-Alkanolen.

11. Verfahren nach den Ansprüchen 1 bis 10,
**dadurch gekennzeichnet, dass** als Lithiumverbindung Lithiumnitrat oder ein Lithiumcarboxylat eingesetzt wird.

12. Verfahren nach den Ansprüchen 1 bis 11,
**dadurch gekennzeichnet, dass** jeweils eine oder mehrere Metallverbindungen ausgewählt aus der Gruppe der Verbindungen von Ag, Al, B, Ca, Cd, Co, Cr, Cu, Fe, Ga, Ge, In, Mg, Mn, Mo, Nb, Ni, Pd, Rh, Ru, Sc, Sn, Ti, V, Y und Zn eingesetzt werden.

13. Verfahren nach den Ansprüchen 1 bis 12,
**dadurch gekennzeichnet, dass** als Metallverbindung jeweils eine oder mehrere Verbindungen von Ni und Co eingesetzt werden.

14. Verfahren nach den Ansprüchen 1 bis 13,
**dadurch gekennzeichnet, dass** als Metallverbindung jeweils eine oder mehrere Verbindungen von Ni, Co und Mn eingesetzt werden.

## Claims

1. Process for preparing a lithium-containing mixed oxide powder, **characterized in that**
a) a stream of a solution containing at least one lithium compound and at least one metal compound of one or more mixed oxide components in the required stoichiometric ratio is atomized by means of an atomizer gas to give an aerosol having an average droplet size of less than 100 µm, and
b) the aerosol is reacted in a reaction space by means of a flame obtained from a mixture of fuel gas and air, with the total amount of oxygen being sufficient for at least complete reaction of the fuel gas and of the metal compounds,
c) the reaction stream is cooled and
d) the solid product is subsequently separated off from the reaction stream.

2. Process according to Claim 1,
**characterized in that** the solid product after separation from the reaction stream is thermally treated at temperatures of from 500 to 1200°C for a period of from 2 to 36 hours.

3. Process according to Claim 1 or 2,
**characterized in that** the fuel gas is introduced into the flame at a plurality of points.

4. Process according to any of Claims 1 to 3, **characterized in that** lambda, defined as the ratio of oxygen present from the air used/oxygen required for combustion of the fuel gas, is from 1.8 to 4.0.

5. Process according to any of Claims 1 to 4, **characterized in that** the sum of the concentrations of the lithium compounds and metal compounds in the solution is at least 10% by weight.

6. Process according to any of Claims 1 to 5, **characterized in that** the ratio of mass stream of the solution/volume stream of the atomizer gas, in g of solution/standard m³ of atomizer gas, is at least 500.

7. Process according to any of Claims 1 to 6, **characterized in that** the amount of metal compounds, air, fuel gas and atomizer air is selected so that 0.001 ≤ kg of mixed oxide/standard m³ of gas ≤ 0.05, where gas denotes the sum of the volume streams of air, fuel gas and atomizer air.

8. Process according to any of Claims 1 to 7, **characterized in that** the average exit velocity of the aerosol into the reaction space is at least 50 ms⁻¹ and the average velocity of the reaction mixture in the reaction space is from 0.1 ms⁻¹ to 10 ms⁻¹.

9. Process according to any of Claims 1 to 8, **characterized in that** inorganic and/or organic metal compounds are used.

10. Process according to any of Claims 1 to 9, **characterized in that** the solvent is selected from the group consisting of water, C₅-C₂₀-alkanes, C₁-C₁₅-alkanecarboxylic acids and C₁-C₁₅-alkanols.

11. Process according to any of Claims 1 to 10, **characterized in that** lithium nitrate or a lithium carboxylate is used as lithium compound.

12. Process according to any of Claims 1 to 11, **characterized in that** one or more metal compounds selected from the group of compounds of Ag, Al, B, Ca, Cd, Co, Cr, Cu, Fe, Ga, Ge, In, Mg, Mn, Mo, Nb, Ni, Pd, Rh, Ru, Sc, Sn, Ti, V, Y and Zn are used.

13. Process according to any of Claims 1 to 12, **characterized in that** one or more compounds of each of Ni and Co are used as metal compound.

14. Process according to any of Claims 1 to 13, **characterized in that** one or more compounds of each of Ni, Co and Mn are used as metal compound.

## Revendications

1. Procédé pour la préparation d'une poudre d'oxyde mixte contenant du lithium, **caractérisé en ce que**
a) on vaporise un flux d'une solution, qui contient à chaque fois au moins un composé du lithium et au moins un composé métallique d'un ou de plusieurs composants d'oxyde mixte dans le rapport stoechiométrique nécessaire, au moyen d'un gaz de vaporisation en un aérosol qui présente une grosseur moyenne des gouttes inférieure à 100 µm,
et
b) on fait réagir l'aérosol dans une chambre de réaction avec une flamme qui est obtenue à partir d'un mélange de gaz de combustion et d'air, la quantité totale d'oxygène suffisant au moins pour la transformation complète du gaz de combustion et des composés métalliques,
c) on refroidit le flux de réaction et
d) on sépare ensuite le produit solide du flux de réaction.

2. Procédé selon la revendication 1, **caractérisé en ce que** le produit solide est traité thermiquement après sa séparation du flux de réaction à des températures de 500 à 1200°C pendant un laps de temps de 2 à 36 heures.

3. Procédé selon la revendication 1 ou 2, **caractérisé en ce qu'**on introduit le gaz de combustion en plusieurs endroits dans la flamme.

4. Procédé selon les revendications 1 à 3, **caractérisé en ce que** lambda, défini comme le rapport oxygène présent de l'air utilisé/oxygène nécessaire pour la combustion du gaz de combustion, vaut 1,8 à 4,0.

5. Procédé selon les revendications 1 à 4, **caractérisé en ce que** la somme des concentrations en composés de lithium et de métal dans la solution est d'au moins 10% en poids.

6. Procédé selon les revendications 1 à 5, **caractérisé en ce que** le rapport flux massique de la solution/flux volumique du gaz de vaporisation, en g de solution/Nm³ de gaz de vaporisation, est d'au moins 500.

7. Procédé selon les revendications 1 à 6, **caractérisé en ce que** la quantité de composés métalliques, d'air, de gaz de combustion et d'air de vaporisation est choisie de manière telle que 0,001 ≤ kg d'oxyde mixte/Nm³ de gaz ≤ 0,05, gaz se rapportant à la somme des flux volumiques d'air, de gaz de combustion et d'air de vaporisation.

8. Procédé selon les revendications 1 à 7, **caractérisé en ce que** la vitesse de sortie moyenne de l'aérosol dans la chambre de réaction est d'au moins 50 ms⁻¹ et la vitesse moyenne du mélange de réaction dans la chambre de réaction est de 0,1 ms⁻¹ à 10 ms⁻¹.

9. Procédé selon les revendications 1 à 8, **caractérisé en ce qu'**on utilise des composés métalliques inorganiques et/ou organiques.

10. Procédé selon les revendications 1 à 9, **caractérisé en ce que** le solvant est choisi dans le groupe constitué par l'eau, les C₅-C₂₀-alcanes, les acides C₁-C₁₅-alcanecarboxyliques et/ou les C₁-C₁₅-alcanols.

11. Procédé selon les revendications 1 à 10, **caractérisé en ce qu'**on utilise, comme composé du lithium, le nitrate de lithium ou un carboxylate de lithium.

12. Procédé selon les revendications 1 à 11, **caractérisé en ce qu'**on utilise à chaque fois un ou plusieurs composés métalliques, choisis dans le groupe formé par les composés Ag, Al, B, Ca, Cd, Co, Cr, Cu, Fe, Ga, Ge, In, Mg, Mn, Mo, Nb, Ni, Pd, Rh, Ru, Sc, Sn, Ti, V, Y et Zn.

13. Procédé selon les revendications 1 à 12, **caractérisé en ce qu'**on utilise, comme composé métallique, à chaque fois un ou plusieurs composés du Ni et du Co.

14. Procédé selon les revendications 1 à 13, **caractérisé en ce qu'**on utilise, comme composé métallique, à chaque fois un ou plusieurs composés du Ni, du Co et du Mn.
